# EUROPÄISCHE PATENTSCHRIFT

(11) **EP 1 552 574 B1**
(45) Veröffentlichungstag und Bekanntmachung des Hinweises auf die Patenterteilung: **19.06.2013**
(21) Anmeldenummer: 03748106.6
(22) Anmeldetag: 02.10.2003
(51) Int. Cl.: H01M 8/10, B01D 67/00, C08G 73/18, C08J 5/22, B01D 71/00

(54) **PROTONENLEITENDE POLYMERMEMBRAN UMFASSEND SULFONSÄUREGRUPPEN ENTHALTENDE POLYAZOLE UND DEREN ANWENDUNG IN BRENNSTOFFZELLEN**
PROTON-CONDUCTING POLYMER MEMBRANE COMPRISING SULFONIC ACID-CONTAINING POLYAZOLES, AND USE THEREOF IN FUEL CELLS
MEMBRANE POLYMERE CONDUCTRICE DE PROTONS COMPRENANT DES POLYAZOLES COMPORTANT DES GROUPES D'ACIDE SULFONIQUE, ET SON UTILISATION DANS DES PILES A COMBUSTIBLE

(30) Priorität: 04.10.2002 DE 10246373
(43) Veröffentlichungstag der Anmeldung: 13.07.2005
(73) Patentinhaber: BASF Fuel Cell Research GmbH, 67056 Ludwigshafen (DE)
(72) Erfinder: UENSAL, Oemer, 55128 Mainz (DE); KIEFER, Joachim, 66679 Losheim am See (DE); CALUNDANN, Gordon, North Plainfield, NJ 07060 (US); SANSONE, Michael, Berkeley Heights, NJ 07927 (US); BENICEWICZ, Brian, Loudonville, NY 12211 (US); CHOE, Eui, Won, Randolph, NJ 07869 (US)
(74) Vertreter: Mai, Dörr, Besier
(86) Internationale Anmeldenummer: PCT/EP2003/010904
(87) Internationale Veröffentlichungsnummer: WO 2004/034499

(56) Entgegenhaltungen:
- WO-A-02/38650
- WO-A-02/071518
- US-A- 4 634 530
- US-A- 5 312 895
- US-A- 5 492 996
- SPRY R J ET AL: "ANISOTROPIC IONIC CONDUCTIVITY OF LITHIUM-DOPED SULFONATED PBI" JOURNAL OF POLYMER SCIENCE, POLYMER PHYSICS EDITION, JOHN WILEY AND SONS. NEW YORK, US, Bd. 35, 1997, Seiten 2925-2933, XP002908288 ISSN: 0887-6266
- PATENT ABSTRACTS OF JAPAN Bd. 2002, Nr. 09, 4. September 2002 (2002-09-04) & JP 2002 146014 A (TOYOBO CO LTD), 22. Mai 2002 (2002-05-22)

## Beschreibung

Die vorliegende Erfindung betrifft eine protonenleitende Polymerelektrolytmembran umfassend Sulfonsäuregruppen enthaltende Polyazole, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt und dadurch chemische Energie aus der Brennstoffoxidation direkt in elektrische Energie umgewandelt. Bei der Oxidationsreaktion werden Protonen und Elektronen gebildet.

Der Elektrolyt ist für Wasserstoffionen, d.h. Protonen, aber nicht für reaktive Brennstoffe wie das Wasserstoffgas oder Methanol und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymermembranen unterscheiden.

Zu der ersten Kategorie gehören Kationenaustauschermembranen bestehend aus einem Polymergerüst welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Durch die sehr gute Mischbarkeit von Methanol und Wasser weisen solche Kationenaustauschermembranen eine hohe Methanolpermeabilität auf und sind deshalb für Anwendungen in einer Direkt-Methanol-Brennstoffzelle ungeeignet. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nafion verwendet werden.
So verwendet man als Materialien für Polymerelektrolytmembranen beispielsweise Perfluorsulfonsäurepolymere. Das Perfluorsulfonsäurepolymer (wie z.B. Nafion) weist im allgemeinen ein Perfluorkohlenwasserstoffgerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe.

Bei den Kationenaustauschermembranen handelt es sich vorzugsweise um organische Polymere mit kovalent gebundenen Säuregruppen, insbesondere Sulfonsäure. Verfahren zur Sulfonierung von Polymeren sind in F. Kucera et. al. Polymer Engineering and Science1988, Vol. 38, No 5, 783-792 beschrieben.

Im Folgenden sind die wichtigsten Typen von Kationenaustauschmembranen aufgeführt die zum Einsatz in Brennstoffzellen kommerzielle Bedeutung erlangt haben:
Der wichtigste Vertreter ist das Perfluorosulfonsäurepolymer Nafion^{®} (US 3692569). Dieses Polymer kann wie in US 4453991 beschrieben in Lösung gebracht und dann als lonomer eingesetzt werden. Kationenaustauschermembranen werden auch erhalten durch Füllen eines porösen Trägermaterials mit einem solchen lonomer. Als Trägermaterial wird dabei expandiertes Teflon bevorzugt (US 5635041).
Eine weitere perfluorinierte Kationenaustauschermembran kann wie in US5422411 beschrieben durch Copolymerisation aus Trifluorostyrol und sulfonylmodifiziertem Trifuorostyrol hergestellt werden. Kompositmembranen bestehend aus einem porösen Trägermaterial, insbesondere expandiertes Teflon, gefüllt mit Ionomeren bestehend aus solchen sulfonylmodifizierten Trifluorostyrol-Copolymeren sind in US5834523 beschrieben. US6110616 beschreibt Copolymere aus Butadien und Styrol und deren anschliesende Sulfonierung zur Herstellung von Kationenaustauschermembranen für Brennstoffzellen.

Eine weitere Klasse von teilfluorierten Kationenaustauschermembranen kann durch Strahlenpfropfen und nachfolgende Sulfonierung hergestellt werden. Dabei wird wie in WO 95/07553 (EP0667983) oder DE19844645-A1 beschrieben an einem zuvor bestrahlten Polymerfilm eine Pfropfungsreaktion vorzugsweise mit Styrol durchgeführt. In einer nachfolgenden Sulfonierungsreaktion erfolgt dann die Sulfonierung der Seitenketten. Gleichzeitig mit der Pfropfung kann auch eine Vernetzung durchgeführt und somit die mechanischen Eigenschaften verändert werden.
Neben obigen Membranen wurde eine weitere Klasse nichtfluorierter Membranen durch Sulfonierung von hochtemperaturstabilen Thermoplasten entwickelt. So sind Membranen aus sulfonierten Polyetherketonen (DE4219077, EP96/01177), sulfoniertem Polysulfon (J. Membr. Sci. 83 (1993) p.211) oder sulfoniertem Polyphenylensulfid (DE19527435) bekannt. lonomere hergestellt aus sulfonierten Polyetherketonen sind in WO 00/15691 beschrieben.

Desweiteren sind Säure-Base-Blendmembranen bekannt, die wie in DE19817374 oder WO 01/18894 beschrieben durch Mischungen von sulfonierten Polymeren und basischen Polymeren hergestellt werden.

Zur weiteren Verbesserung der Membraneigenschaften kann eine aus dem Stand der Technik bekannte Kationenaustauschermembran mit einem hochtemperaturstabilen Polymer gemischt werden. Die Herstellung und Eigenschaften von Kationenaustauschermembranen bestehend aus Blends aus sulfoniertem PEK und a) Polysulfonen (DE4422158), b) aromatischen Polyamiden (42445264) oder c) Polybenzimidazol (DE19851498) sind beschrieben.

Problematisch an derartigen Membranen ist jedoch deren aufwendige und somit teure Herstellung, da üblich zunächst verschiedene Polymere gebildet werden, welche anschließend häufig mit Hilfe eines Lösungsmittels zu einer Folie gegossen werden. Zur Darstellung der sulfonierten Polymere wird üblicherweise das PEK in einem geeigneten Lösungsmittel gelöst und anschließend mit einem aggressiven Sulfonierungsreagenz, beispielsweise Oleum oder Chlorsulfonsäure, umgesetzt. Diese Reaktion ist relativ kritisch, da das Sulfonierungsreagenz ein starkes Oxidationsmittel darstellt, so dass ein Abbau des PEK nicht ausgeschlossen werden kann, wobei insbesondere die mechanischen Eigenschaften des Polymers nachteilig beeinflußt werden. Das sulfonierte Polymer wird in einem weiteren Prozeßschritt isoliert und in die neutrale Form überführt. Danach wird das Polymer wieder in Lösung gebracht. Aus dieser Lösung kann unter anderem ein Polymerfilm gegossen werden. Das hierzu verwendete Lösungsmittel, beispielsweise N-Dimethylacetamid muß anschließend entfernt werden. Dementsprechend ist das Verfahren zur Herstellung derartiger Membranen aufwendig und somit teuer.

Bei diesen Sulfonierungsverfahren unter dem Einsatz sehr starker Sulfonierungsagenzien findet eine unkontrollierte Sulfonierung an einer Vielzahl an Stellen des Polymers statt. Die Sulfonierung kann auch zu Kettenbruch und somit zu einer Verschlechterung der mechanischen Eigenschaften und schliesslich zum vorzeitigen Versagen der Brenstoffzelle führen.

Auch Sulfonierte Polybenzimidazole sind bereits aus der Literatur bekannt.
So beschreibt US-A-4634530) eine Sulfonierung einer undotierten Polybenzimidazol-Folie mit einem Sulfonierungsmittel wie Schwefelsäure oder Oleum im Temperaturbereich bis 100°C.

Des weiteren haben Staiti et al (P. Staiti in J. Membr. Sci. 188 (2001) 71) die Herstellung und Eigenschaften von sulfoniertem Polybenzimidazole beschrieben. Dazu war es nicht möglich die Sulfonierung an dem Polymer in der Lösung vorzunehmen. Bei Zugabe des Sulfonierungsmittels zu der PBI/DMAc Lösung fällt das Polymer aus. Zur Sulfonierung wurde zunächst ein PBI-Film hergestellt und dieser in eine verdünnte Schwefelsäure getaucht. Zur Sulfonierung wurden die Proben dann bei Temperaturen von ca. 475°C während 2 Minuten behandelt. Die sulfonierten PBI Membranen besitzen nur eine maximale Leitfähigkeit von 7,5*10⁻⁵ S/cm bei einer Temperatur von 160°C. Die maximale Ionenaustauschkapazität beträgt 0,12 meq/g. Es wurde ebenfalls gezeigt, dass solchermassen sulfonierte PBI Membranen nicht für den Einsatz in einer Brennstoffzelle geeignet sind.

Die Herstellung von sulfoalkylierten PBI Membranen durch die Umsetzung eines hydroxyethyl-modifizierten PBI mit einem Sulton ist in US-A-4997892 beschrieben. Basierend auf dieser Technologie können sulfopropylierte PBI Membranen hergestelltten werden (Sanui et al in Polym. Adv. Techn. 11 (2000) 544). Die Protonenleitfähigkeit solcher Membranen liegt bei 10⁻³ S/Cm und ist somit für Anwendungen in Brennstoffzellen, bei denen 0,1 S/cm angestrebt sind, zu niedrig.

Nachteil all dieser Kationenaustauschermembranen ist die Tatsache, dass die Membran befeuchtet werden muss, die Betriebstemperatur auf 100°C beschränkt ist, und die Membranen eine hohe Methanolpermeabilität aufweisen. Ursache für diese Nachteile ist der Leitfähigkeitsmechanismus der Membran, bei der der Transport der Protonen an den Transport des Wassermoleküls gekoppelt ist. Dies bezeichnet man als "Vehicle-Mechanismus" (K.-D. Kreuer, Chem. Mater. 1996, 8, 610-641).

Als zweite Kategorie sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazol, mit einer starken Säure, wie Phosphorsäure, Schwefelsäure usw., behandelt wird.

In J. Electrochem. Soc., Band 142, Nr. 7, 1995, S. L121-L123 wird die Dotierung eines Polybenzimidazols in Phosphorsäure beschrieben.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Ein grosser Vorteil von Brennstoffzellen ist die Tatsache, dass bei der elektrochemischen Reaktion die Energie des Brennstoffes direkt in elektrische Energie und Wärme umgewandelt wird. Als Reakionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss die Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches Brennstoffzellensystem jedoch auch Nachteile auf. So ist die Haltbarkeit von Phosphorsäure dotierten Membranen relativ noch zu verbessern. Hierbei wird die Lebensdauer insbesondere durch einen Betrieb der Brennstoffzelle unterhalb von 100°C, beispielsweise bei 80°C deutlich herabgesetzt. In diesem Zusammenhang ist jedoch festzuhalten, dass beim An- und Herunterfahren der Brennstoffzelle die Zelle bei diesen Temperaturen betrieben werden muss.

Ferner sind aus EP 1354907 A1 Polymer-Elektrolyt-Membranen aus Polybenzazolen mit Sulfonsäure- und/oder Phosphonsäuregruppen bekannt. Die Sulfonsäuregruppen-haltigen Polybenzazole werden durch Polykondensation Sulfonsäure-haltiger Monomere in Gegenwart von Polyphosphorsäure erhalten, wobei die Polyphosphorsäure nach der Polykondensationsreaktion zu Phosphorsäure hydrolysiert und ausgewaschen (Neutralwaschen) wird. Die resultierenden Polymere werden anschließend durch ein Gießverfahren unter Verwendung eines organischen Lösungsmittels, wie z. B. NMP, in eine Membran umgeformt.

US 5,492,996 beschreibt die Herstellung bestimmter Alkohol-löslicher, sulfonierter, heterozyklischer Polymere, die in ihrer Hauptkette Stickstoff sowie Sauerstoff und/oder Schwefel enthalten.

Die Publikation Spry et al. "Anisotropic Ionic Conductivity of Lithium-Doped Sulfonated PBI" beschäftigt sich mit der anisotropen Leitfähigkeit und der Morphologie von einigen speziellen, Li⁺-dotierten, sufonierten Polybenzimidazolderivaten.

Aus JP 2002-146014 sind Ionen-leitende Phosphonsäuregruppen-haltige Polyazole bekannt.

Des Weiteren sind aus US 5,312,895 sulfonierte Polybenzimidazole bekannt: eine Verwendung der Polymeren zur Herstellung von Polymermembranen wird jedoch nicht offenbart.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. So ist die Herstellung von Phosphorsäure dotierten Membranen relativ teuer, da üblich zunächst ein Polymer gebildet wird, welches anschließend mit Hilfe eines Lösungsmittels zu einer Folie gegossen wird. Nach der Trocknung der Folie wird diese in einem letzten Schritt mit einer Säure dotiert. So haben die bislang bekannten Polymermembranen einen hohen Gehalt an Dimethylacetamid (DMAc), der mittels bekannter Trocknungsmethoden nicht vollständig entfernt werden kann.

Des weiteren ist die Leistungsfähigkeit, beispielsweise die Leitfähigkeit von bekannten Membranen noch zu verbessern.

Der vorliegenden Erfindung liegt daher die Aufgabe zugrunde, eine neuartige Polymerelektrolytmembran bereitzustellen, die die zuvor dargelegten Aufgaben löst. Insbesondere soll so die Betriebstemperatur von <80°C bis auf 200°C ausgeweitet werden können, ohne dass die Lebensdauer der Brennstoffzelle sehr stark herabgesetzt werden würde.

Des weiteren soll eine erfindungsgemäße Membran kostengünstig und einfach hergestellt werden können. Darüber hinaus war es mithin Aufgabe der vorliegenden Erfindung Polymerelektrolytmembranen zu schaffen, die eine hohe Leistungsfähigkeit, insbesondere eine hohe Leitfähigkeit über einen weiten Temperaturbereich zeigen. Hierbei sollte die Leitfähigkeit, insbesondere bei hohen Temperaturen ohne eine zusätzliche Befeuchtung erzielt werden.

Gelöst werden diese Aufgaben durch eine protonenleitende Polymermembran umfassend Sulfonsäuregruppen enthaltende Polyazole mit allen Merkmalen des Anspruchs 1.

Eine erfindungsgemäße Membran zeigt über einen großen Temperaturbereich eine hohe Leitfähigkeit, die auch ohne eine zusätzliche Befeuchtung erzielt wird. Des weiteren kann eine Brennstoffzelle, die mit einer erfindungsgemäßen Membran ausgestattet ist, auch bei tiefen Temperaturen, beispielsweise bei 80°C betrieben werden, ohne dass hierdurch die Lebensdauer der Brennstoffzelle sehr stark herabgesetzt wird.

Des weiteren kann eine erfindungsgemäße Membran einfach und kostengünstig hergestellt werden. So kann insbesondere auf große Mengen an teuren Lösungsmitteln, wie Dimethylacetamid verzichtet werden.

Des weiteren zeigen diese Membranen eine überraschend lange Lebensdauer.

Gegenstand der vorliegenden Erfindung ist eine protonenleitende Polymermembran umfassend Sulfonsäuregruppen enthaltende Polyazole erhältlich durch ein Verfahren umfassend die Schritte
A) Mischen von einem oder mehreren aromatischen und/oder heteroaromatischen Tetra-Amino-Verbindungen mit einer oder mehreren aromatischen und/oder heteroaromatischen Carbonsäuren, die mindestens zwei Säuregruppen pro Carbonsäure-Monomer enthalten, deren Ester, Anhydride oder Säurehalogenide, wobei zumindest ein Teil der Tetra-Aminoverbindungen und/oder der Carbonsäuren mindestens eine Sulfonsäuregruppe oder deren Alkalimetallsalz umfasst, oder Mischen von einer oder mehreren aromatischen und/oder heteroaromatischen Diaminocarbonsäuren, von denen zumindest ein Teil Sulfonsäuregruppen umfasst, in Polyphosphorsäure, unter Ausbildung einer Lösung und/oder Dispersion,
B) Erwärmen der Lösung und/oder Dispersion erhältlich gemäß Schritt A) unter Inertgas auf Temperaturen von bis zu 350°C unter Ausbildung von Polyazol-Polymeren,
C) Aufbringen einer Schicht unter Verwendung der Mischung gemäß Schritt A) und/oder B) auf einem Träger,
D) partielle Hydrolyse der in Schritt C) gebildeten Membran in Gegenwart von Feuchtigkeit und für eine Dauer bis diese selbsttragend ist.

Die in Schritt A) hergestellte Mischung umfasst sulfonsäuregruppenhaltige Monomere zur Herstellung von Polayzolen. Dementsprechend können entweder die zur Herstellung dieser Polymere notwendigen Tetra-Amino-Verbindungen oder die aromatischen Carbonsäure mit mindestens zwei Carboxygruppen Sulfonsäurereste aufweisen. Des weiteren können sowohl die Tetra-Amino-Verbindungen als auch die aromatischen Carbonsäuren Sulfonsäuregruppen aufweisen. Hierbei können die Mischungen auch Tetra-Aminoverbindungen und aromatische Carbonsäuren umfassen, die keine Sulfonsäuregruppen aufweisen.

Bevorzugte aromatische und/oder heteroaromatische Tetra-Amino-Verbindungen, die mindestens eine Sulfonsäuregruppe aufweisen, entsprechen im allgemeinen der Formel (A) 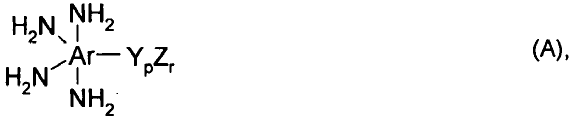 worin
- Ar: eine aromatische oder heteroaromatische Gruppe darstellt,
- Y: eine Bindung oder eine 1 bis 20 Kohlenstoffatome aufweisende Gruppe ist,
- p: eine ganze Zahl zwischen 1 und 4 ist, wobei p die Anzahl an Bindungen oder Gruppen Y darstellt, über die die Gruppe Z mit der Gruppe Ar verknüpft ist,
- r: eine ganze Zahl zwischen 1 und 4 ist, wobei r die Anzahl der Gruppen Z darstellt, die an die Gruppe Y oder, falls Y eine Bindung ist, an die aromatische oder heteroaromatische Gruppe Ar geknüpft sind, und
- Z: eine Gruppe der allgemeinen Formel (1)
oder der allgemeinen Formel (2) 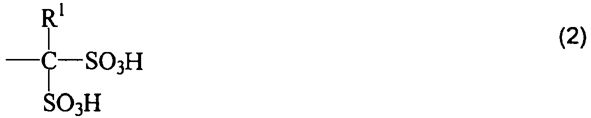 ist, worin R¹ ein Wasserstoffatom oder eine 1 bis 20 Kohlenstoffatome aufweisende Gruppe ist.

Neben den freien Sulfonsäureverbindungen können auch die entsprechenden Salze, beispielsweise die Alkalimetallsalze, oder die Ester der Phosphonsäuren der Mischung beigefügt werden. Zu den bevorzugten Estern gehören insbesondere die C1 bis C6-Alkylester dieser Verbindungen, beispielsweise die Methyl- und/oder Ethylester.

Gemäß einem bevorzugten Aspekt der vorliegenden Erfindung stellt Y eine Bindung dar, p und r sind jeweils 1 und Z entspricht der Formel (1). Derartige Verbindungen lassen sich besonders einfach durch Sulfonierung von bekannten, im allgemeinen kommerziell erhältlichen Aromaten oder Heteroaromaten erhalten. Falls Y eine Bindung darstellt, ist p gleich 1, wobei die Gruppe Z unmittelbar an die aromatische oder heteroaromatische Gruppe Ar gebunden ist. In diesem Fall stellt die Zahl r die Anzahl der Gruppen Z dar, die über eine Bindung an die aromatische oder heteroaromatische Gruppe Ar gebunden sind.

Erfindungsgemäß bezeichnen aromatische Gruppen Reste ein oder mehrkerniger aromatischer Verbindungen mit vorzugsweise 6 bis 20, insbesondere 6 bis 12 C-Atomen. Heteroaromatische Gruppen kennzeichnen Arylreste, worin mindestens eine CH-Gruppe durch N ersetzt ist und/oder mindestens zwei benachbarte CH-Gruppen durch S, NH oder O ersetzt sind, wobei heteroaromatische Gruppen 3 bis 19 Kohlenstoffatome aufweisen. Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Der Ausdruck "1 bis 20 Kohlenstoff aufweisende Gruppe" kennzeichnet Reste organischer Verbindungen mit 1 bis 20 Kohlenstoffatomen. Er umfasst neben den vorstehend schon genannten aromatischen und heteroaromatischen Gruppen u. a. Alkyl-, Cycloalkyl-, Alkoxy-, Cycloalkoxy-, Cycloalkylthio-, Alkenyl-, Alkanoyl-, Alkoxycarbonylgruppen sowie heteroalipatische Gruppen. Dabei können die genannten Gruppen verzweigt oder nicht verzweigt sein.

Zu den bevorzugten Alkylgruppen gehören die Methyl-, Ethyl-, Propyl-, Isopropyl-, 1-Butyl-, 2-Butyl-, 2-Methylpropyl-, tert.-Butylrest, Pentyl-, 2-Methylbutyl-, 1,1-Dimethylpropyl-, Hexyl-, Heptyl-, Octyl-, 1,1,3,3-Tetramethylbutyl, Nonyl-, 1-Decyl-, 2-Decyl-, Undecyl-, Dodecyl-, Pentadecyl- und die Eicosyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe, die gegebenenfalls mit verzweigten oder nicht verzweigten Alkylgruppen substituiert sind.

Zu den bevorzugten Alkenylgruppen gehören die Vinyl-, Allyl-, 2-Methyl-2-propen-, 2-Butenyl-, 2-Pentenyl-, 2-Decenyl- und die 2-Eicosenyl-Gruppe.

Zu den bevorzugten Alkinylgruppen gehören die Ethinyl-, Propargyl-, 2-Methyl-2- propin, 2-Butinyl-, 2-Pentinyl- und die 2-Decinyl-Gruppe.

Zu den bevorzugten Alkanoylgruppen gehören die Formyl-, Acetyl-, Propionyl-, 2-Methylpropionyl-, Butyryl-, Valeroyl-, Pivaloyl-, Hexanoyl-, Decanoyl- und die Dodecanoyl-Gruppe.

Zu den bevorzugten Alkoxycarbonylgruppen gehören die Methoxycarbonyl-, Ethoxycarbonyl-, Propoxycarbonyl-, Butoxycarbonyl-, tert.-Butoxycarbonyl- Gruppe, Hexyloxycarbonyl-, 2-Methylhexyloxycarbonyl-, Decyloxycarbonyl- oder Dodecyloxycarbonyl-Gruppe.

Zu den bevorzugten Alkoxygruppen gehören Alkoxygruppen, deren Kohlenwasserstoffrest eine der vorstehend genannten bevorzugten Alkylgruppen ist.

Zu den bevorzugten Cycloalkoxygruppen gehören Cycloalkoxygruppen, deren Kohlenwasserstoffrest eine der vorstehend genannten bevorzugten Cycloalkylgruppen ist.

Zu den bevorzugten heteroaliphatischen Gruppen gehören die vorstehend genannten bevorzugten Cycloalkylreste, in denen mindestens eine Kohlenstoff-Einheit durch O, S oder eine Gruppe NR² ersetzt ist und R² Wasserstoff, eine 1 bis 6 Kohlenstoffatome aufweisende Alkyl-, eine 1 bis 6 Kohlenstoffatome aufweisende Alkoxy- oder eine Arylgruppe bedeutet.

Erfindungsgemäss ganz besonders bevorzugt werden verzweigte oder nicht verzweigte Alkyl-, oder Alkoxygruppen mit 1 bis 20 Kohlenstoffatomen, vorzugsweise 1 bis 12, zweckmässigerweise 1 bis 6, insbesondere 1 bis 4 Kohlenstoffatomen und Cycloalkyl- bzw. Cycloalkyloxygruppen mit 3 bis 20 Kohlenstoffatomen, vorzugsweise 5 bis 6 Kohlenstoffatomen.

Obwohl bei den vorstehend genannten Resten ein oder mehrere Wasserstoffatome durch Halogenatome, bevorzugt Chlor oder Fluor, Thiol- oder Hydroxygruppen sowie Gruppen der allgemeinen Formel NR²R³ und N⁺R²R³R⁴ ersetzt sein können, wobei die Reste R², R³ und R⁴ unabhängig voneinander Wasserstoff, eine 1 bis 6 Kohlenstoffatome aufweisende Alkyl-, eine 1 bis 6 Kohlenstoffatome aufweisende Alkoxy- oder eine Arylgruppe bedeuten, haben sich nicht substituierte Reste als besonders zweckmässig erwiesen.

Zu diesen Verbindungen gehören unter anderem 3,3',4,4'-Tetraaminobiphenyl-5-sulfonsäure, 3,3',4,4'-Tetraaminobiphenyl-5,5'-disulfonsäure, 3,3',4,4'-Tetraaminodiphenylsulfon-5-sulfonsäure, 3,3',4,4'-Tetraaminodiphenylsulfon-5,5'-disulfonsäure, 3,3',4,4'-Tetraaminodiphenylether-5-sulfonsäure und 3,3',4,4'-Tetraaminodiphenylether-5,5'-disulfonsäure.

Des weiteren kann die Mischung aromatischen und heteroaromatischen Tetra-Amino-Verbindungen umfassen, die keine Sulfonsäuregruppen enthalten. Zu diesen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan
sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Die in Schritt A) hergestellte Mischung kann aromatische und/oder heteroaromatische Carbonsäuren sowie deren Derivate umfassen, die Sulfonsäuregruppen enthalten. Hierbei handelt es sich unter anderem um Dicarbonsäuren und Tricarbonsäuren und Tetracarbonsäuren bzw. deren Derivate. Zu den bevorzugten Derivaten gehören unter anderem die Ester, insbesondere C1-C20-Alkyl-Ester oder C5-C12-Aryl-Ester, die Anhydride oder die Säurehalogenide, insbesondere die Säurechloride und/oder die Säurebromide.

Bevorzugte aromatische und/oder heteroaromatische Carbonsäuren bzw. deren Derivate, die mindestens zwei Säuregruppen pro Carbonsäure-Monomer enthalten, entsprechen im allgemeinen der Formel (B) 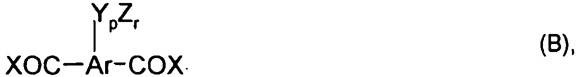 worin
- Ar: eine aromatische oder heteroaromatische Gruppe darstellt, die gegebenenfalls weitere Substituenten, beispielsweise Carbonsäuregruppen oder deren Derivate, beispielsweise deren Ester oder deren Carbonsäurehalogenide, aufweisen kann,
- X: ein Halogenatom, beispielsweise Chlor, Iod oder Brom, oder eine Gruppe der Formel OR² darstellt, worin R² ein Wasserstoffatom oder eine 1 bis 20 Kohlenstoff aufweisende Gruppe darstellt,
- Y: eine Bindung oder eine 1 bis 20 Kohlenstoffatome aufweisende Gruppe ist,
- p: eine ganze Zahl zwischen 1 und 4 ist, wobei p die Anzahl an Bindungen oder Gruppen Y darstellt, über die die Gruppe Z mit der Gruppe Ar verknüpft ist,
- r: eine ganze Zahl zwischen 1 und 4 ist, wobei r die Anzahl der Gruppen Z darstellt, die an die Gruppe Y oder, falls Y eine Bindung ist, an die aromatische oder heteroaromatische Gruppe Ar geknüpft sind, und
- Z: eine Gruppe der allgemeinen Formel (1)

-SO₃H (1)

oder der allgemeinen Formel (2) 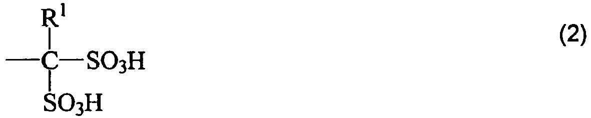 ist, worin R¹ ein Wasserstoffatom oder eine 1 bis 20 Kohlenstoffatome aufweisende Gruppe ist.

Neben den freien Sulfonsäureverbindungen können auch die entsprechenden Salze, beispielsweise die Alkalimetallsalze, oder die Ester der Phosphonsäuren der Mischung beigefügt werden. Zu den bevorzugten Estern gehören insbesondere die C1 bis C6-Alkylester dieser Verbindungen, beispielsweise die Methyl- und/oder Ethylester.

Gemäß einem bevorzugten Aspekt der vorliegenden Erfindung stellt Y eine Bindung dar, p und r sind jeweils 1 und Z entspricht der Formel (1). Derartige Verbindungen lassen sich besonders einfach durch Sulfonierung von bekannten, im allgemeinen kommerziell erhältlichen Aromaten oder Heteroaromaten erhalten.

Zu den bevorzugten aromatischen Dicarbonsäuren bzw. deren Derivaten gehören unter anderem 2,5-Dicarboxyphenylsulfonsäure, 2,3-Dicarboxyphenylsulfonsäure 3,4-Dicarboxyphenylsulfonsäure und 3,5-Dicarboxyphenylsulfonsäure.

Des weiteren kann die Mischung aromatische Carbonsäuren umfassen, die keine Sulfonsäuregruppen umfassen. Hierbei handelt es sich um Dicarbonsäuren und Tricarbonsäuren und Tetracarbonsäuren bzw. deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tricarbonsäuren bzw. deren C1-C20-Alkyl-Ester oder C5-C12-ArylEster oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren bzw. deren C1-C20-Alkyl-Ester oder C5-C12-ArylEster oder deren Säureanhydride oder deren Säurechloride, die keine Sulfonsäuregruppen aufweisen, handelt es sich bevorzugt um 3,5,3',5'-biphenyltetracarbonsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den heteroaromatischen Carbonsäuren, die keine Sulfonsäuregruppen aufweisen, handelt es sich um heteroaromatischen Dicarbonsäuren und Tricarbonsäuren und Tetracarbonsäuren bzw. deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tricarbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%. Diese Angaben beziehen sich auf die Summe der Carbonsäuren, unabhängig vom Sulfonsäuregehalt.

Bei den erfindungsgemäß eingesetzten aromatischen und heteroaromatischen Diaminocarbonsäuren, die mindestens eine Sulfonsäuregruppe umfassen, handelt es sich bevorzugt Hierbei handelt es sich bevorzugt um 2,3-Diamino-5-carboxyphenylsulfonsäure, 2,3-Diamino-6-carboxyphenylsulfonsäure und 3,4-Diamino-6-carboxyphenylsulfonsäure.

Neben den freien Sulfonsäureverbindungen können auch die entsprechenden Salze, beispielsweise die Alkalimetallsalze, oder die Ester der Phosphonsäuren der Mischung beigefügt werden. Zu den bevorzugten Estern gehören insbesondere die C1 bis C6-Alkylester dieser Verbindungen, beispielsweise die Methyl- und/oder Ethylester.

Des weiteren kann die Mischung auch aromatische und heteroaromatische Diaminocarbonsäuren enthalten, die keine Sulfonsäuregruppen enthalten. Zu diesen gehört unter anderem Diaminobenzoesäure, 4-Phenoxycarbonyl-3,'4'-diaminodiphenylether und deren Mono- und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1. Diese Angaben sind unabhängig vom Sulfonsäuregehalt der Carbonsäuren.

Bei diesen Mischungen handelt es sich insbesondere um Mischungen von N-heteroaromatischen Dicarbonsäuren und aromatischen Dicarbonsäuren. Nicht limitierende Beispiele für Dicarbonsäuren ohne Sulfonsäuregruppe sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure. Carbonsäuren mit Sulfonsäuregruppen lassen sich auf einfache Weise von den zuvor genannten Verbindungen ableiten.

Soll ein möglichst hohes Molekulargewicht erzielt werden, so liegt das Molverhältnis von Carbonsäuregruppen zu Aminogruppen bei der Umsetzung von Tetra-Amino-Verbindungen mit einer oder mehreren aromatischen Carbonsäuren bzw. deren Estern, die mindestens zwei Säuregruppen pro Carbonsäure-Monomer enthalten, vorzugsweise in der Nähe von 1:2.

Die in Schritt A) hergestellte Mischung umfasst vorzugsweise mindestens 0,5 Gew.-%, insbesondere 1 bis 30 Gew.-% und besonders bevorzugt 2 bis 15 Gew.-% Monomere zur Herstellung von Polyazolen.

Der Gehalt an Sulfonsäuregruppen enthaltenden Monomeren, bezogen auf alle Monomere, die zur Herstellung von Polyazolen dienen, liegt im allgemeinen im Bereich von 0,5 bis 100 Gew.-%, vorzugsweise 2 bis 80 Gew.-%, besonders bevorzugt 5 bis 50 Gew.-%, ohne dass hierdurch eine Beschränkung erfolgen soll. Hierbei sind insbesondere Mischungen bevorzugt, die Sulfonsäuregruppen enthaltende Carbonsäuren mit mindestens zwei Carbonsäuregruppen sowie Tetra-Amino-Verbindungen ohne Sulfonsäuregruppen umfassen.

Gemäß einem besonderen Aspekt der vorliegenden Erfindung liegt das molare Schwefel zu Stickstoff Verhältnis (S/N-Verhältnis), bezogen auf die gemäß Schritt B) erhältlichen Polyazole, zwischen 0,02 bis 2, bevorzugt zwischen 0,05 bis 1 und ganz besonders bevorzugt zwischen 0,07 bis 0,25, ohne dass hierdurch eine Beschränkung erfolgen soll. Das S/N-Verhältnis kann mittels Elementaranalyse gemessen werden.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Gemäß einem bevorzugten Aspekt der vorliegenden Erfindung wird in Schritt A) eine Mischung gebildet, die mindestens ein Sulfonsäuregruppen enthaltende, aromatische Carbonsäure und mindestens eine Aminoverbindung ohne Sulfonsäuregruppen umfasst. Wird eine solche Mischung eingesetzt, so wird in Schritt B) ein Sulfonsäuregruppen enthaltendes Polyazol gebildet umfassend wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 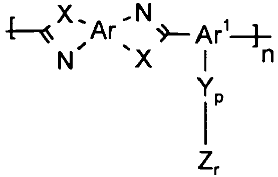 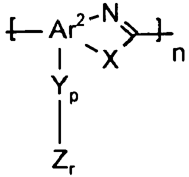 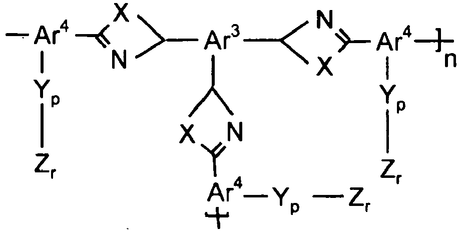 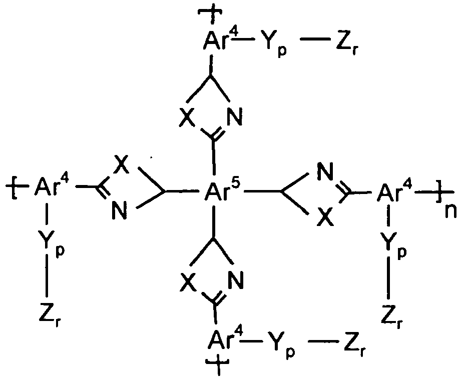 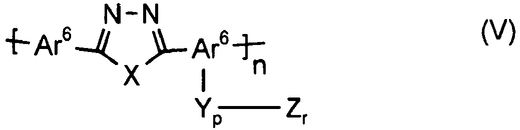 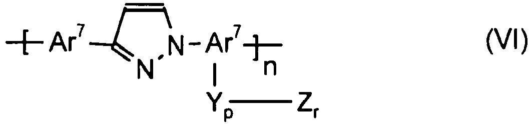 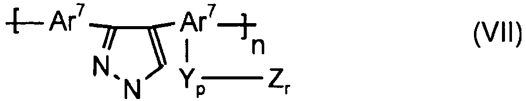 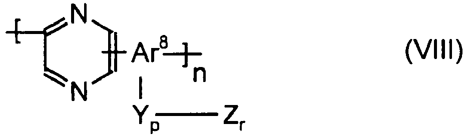 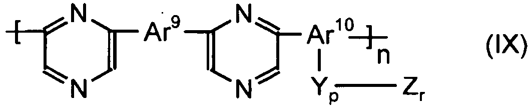 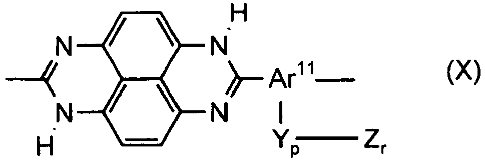 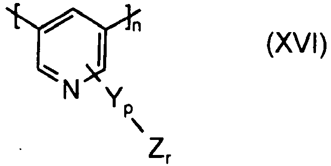 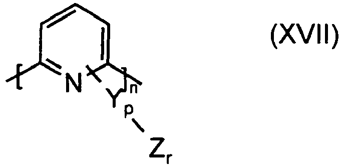 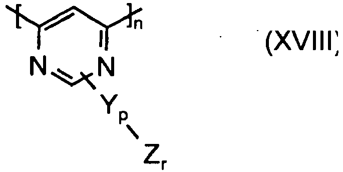 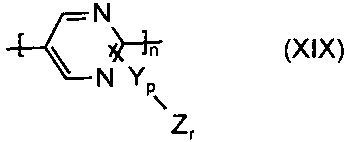 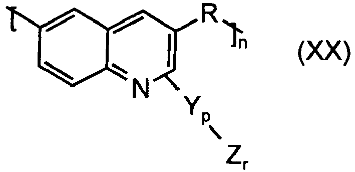 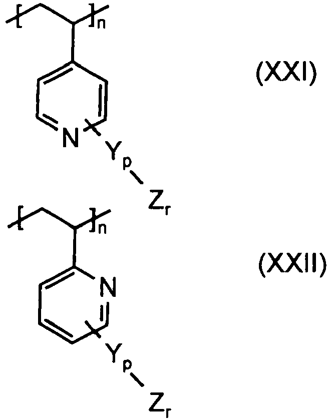
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht und
- n, m: eine ganze Zahl größer gleich 10, bevorzugt größer gleich 100 ist.
- Y: eine Bindung oder eine 1 bis 20 Kohlenstoffatome aufweisende Gruppe ist,
- p: unabhängig voneinander eine ganze Zahl zwischen 1 und 4 ist, wobei p die Anzahl an der Bindungen oder Gruppen Y darstellt, über die die Gruppe Z mit der aromatischen oder heteroaromatischen Gruppe verknüpft ist,
- r: unabhängig voneinander eine ganze Zahl zwischen 1 und 4 ist, wobei r die Anzahl der Gruppen Z darstellt, die an die Gruppe Y oder, falls Y eine Bindung ist, an die aromatische oder heteroaromatische Gruppe geknüpft sind, und
- Z: eine Gruppe der allgemeinen Formel (1)

-SO₃H (1)

oder der allgemeinen Formel (2) 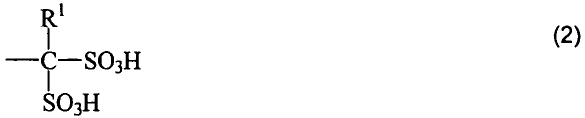 ist, worin R¹ ein Wasserstoffatom oder eine 1 bis 20 Kohlenstoffatome aufweisende Gruppe ist.

Hierbei umfassen die Zahlen n und m, die die Anzahl der Wiederkehrenden Einheiten darstellt, auch die Wiederkehrenden Einheiten, die keine Sulfonsäuregruppen aufweisen.

Die Begriffe "aromatische oder heteroaromatische Gruppe" sowie "1 bis 20 Kohlenstoff aufweisende Gruppe" wurden zuvor dargelegt.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 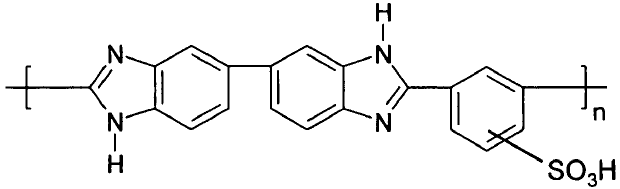 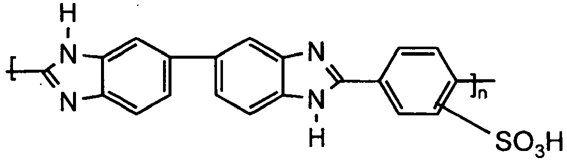 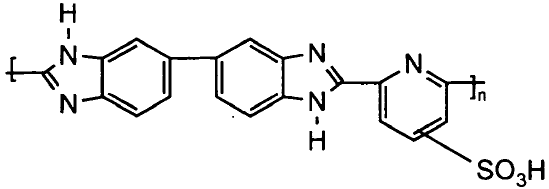 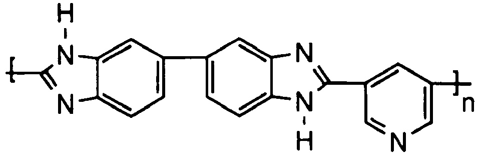 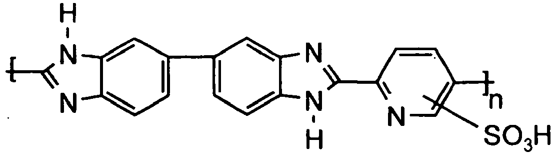 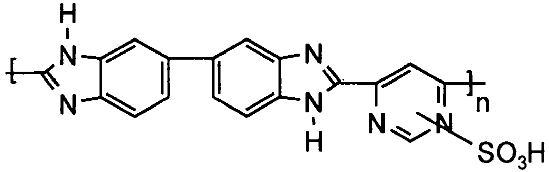 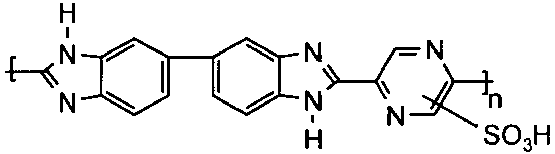 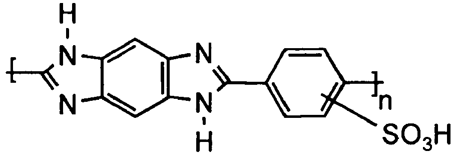 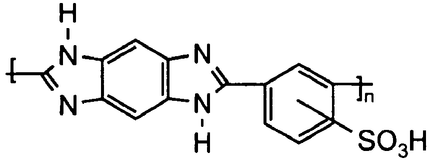 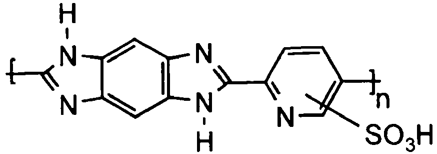 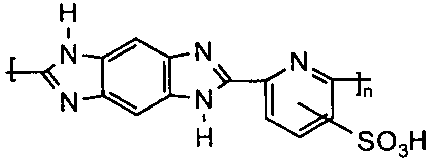 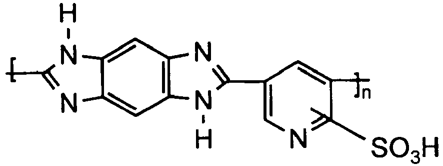 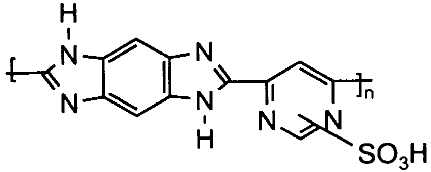 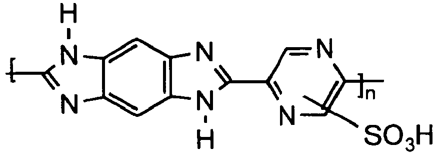 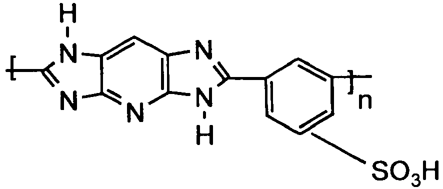 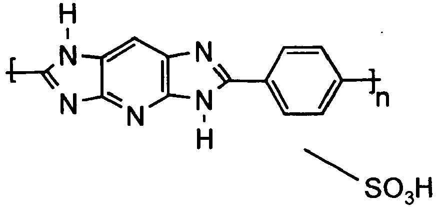 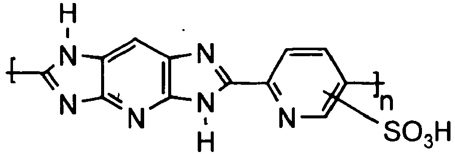 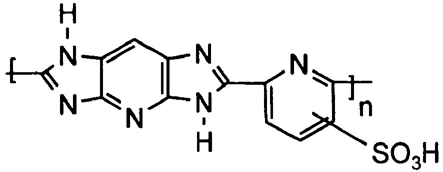 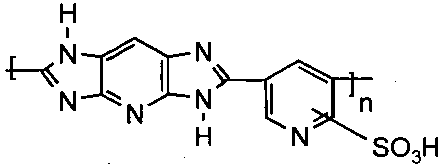 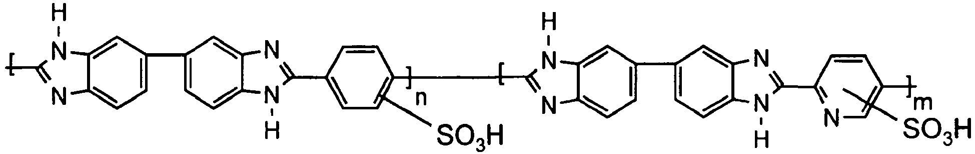 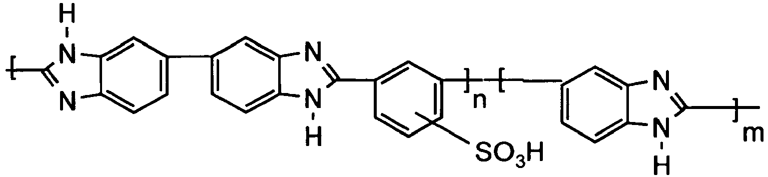 wobei n und m eine ganze Zahl größer gleich 10, vorzugsweise größer gleich 100 ist. Hierbei umfassen die Zahlen n und m, die die Anzahl der Wiederkehrenden Einheiten darstellt, auch die Wiederkehrenden Einheiten, die keine Sulfonsäuregruppen aufweisen. Diese Einheiten entstehen durch eine Polyreaktion von Monomeren, insbesondere von aromatischen Carbonsäuren mit mindestens zwei Säuregruppen, die keine Sulfonsäuregruppe umfassen.

Die mittel des beschriebenen Verfahrens erhältlichen Polyazole, insbesondere jedoch die Polybenzimidazole zeichnen sich durch ein hohes Molekulargewicht aus. Gemessen als Intrinsische Viskosität liegt diese im Bereich von 0,3 bis 10 dl/g, vorzugsweise 1 bis 5 dl/g. Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei.

Die in Schritt A) erhaltene Mischung wird gemäß Schritt B) auf eine Temperatur von bis zu 350°C, vorzugsweise bis zu 280°C, insbesondere 100°C bis 250°C und besonders bevorzugt im Bereich von 200°C bis 250°C erhitzt. Hierbei wird ein Inertgas, beispielsweise Stickstoff oder ein Edelgas, wie Neon, Argon, eingesetzt.

Es hat sich weiterhin gezeigt, dass bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, die Temperatur in Schritt B) im Bereich von bis zu 300°C, vorzugsweise zwischen 100°C und 250°C, günstig ist. Diese Temperaturbereiche gelten auch für die entsprechenden Sulfonsäuregruppen enthaltenden Carbonsäuren.

In einer Variante des Verfahrens kann die Erwärmung gemäß Schritt B) nach der Bildung eines flächigen Gebildes gemäß Schritt C) erfolgen.

Die in Schritt A) und/oder Schritt B) hergestellte Mischung kann zusätzlich noch organische Lösungsmittel enthalten. Diese können die Verarbeitbarkeit positiv beeinflussen. So kann beispielsweise die Rheologie der Lösung verbessert werden, so dass diese leichter extrudiert oder gerakelt werden kann.

Die in Schritt A) und/oder Schritt B) erzeugte Mischung kann auch noch gelöstes, dispergiertes oder suspendiertes Polymer enthalten. Derartige Polymere können auch nach Schritt B) der Mischung zugegeben werden.

Zu den bevorzugten Polymeren gehören unter anderem Polyolefine, wie Poly(cloropren), Polyacetylen, Polyphenylen, Poly(p-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen;
Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;
Polymere C-S-Bindungen in der Hauptkette, beispielsweise Polysulfidether, Polyphenylensulfid, Polyethersulfon; Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine;
Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Des weiteren kann die in Schritt A) und/oder Schritt B) erzeugte Mischung auch Polymere mit kovalent gebundenen Säuregruppen umfassen. Diese Polymere können der Mischung auch nach Schritt B) zugesetzt werden. Diese Säuregruppen umfassen insbesondere Sulfonsäuregruppen. Die mit Sulfonsäuregruppen modifizierten Polymere besitzen vorzugsweise einen Gehalt an Sulfonsäuregruppen im Bereich von 0,5 bis 3 meq/g. Dieser Wert wird über die sog. Ionenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die Ionenaustauschkapazität (IEC) berechnet.

Derartige Polymere sind in der Fachwelt bekannt. So können Sulfonsäuregruppen enthaltende Polymere beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

So wurde eine weitere Klasse nichtfluorierter Polymere durch Sulfonierung von hochtemperaturstabilen Thermoplasten entwickelt. So sind sulfonierte Polyetherketone (DE-A-4219077, W096/01177), sulfonierte Polysulfone (J. Membr. Sci. 83 (1993) p.211) oder sulfoniertes Polyphenylensulfid (DE-A-19527435) bekannt.

US-A-6110616 beschreibt Copolymere aus Butadien und Styrol und deren anschliesende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Zu diesen Perfluorosulfonsäurepolymeren gehört unter anderem Nafion^{®} (US-A-3692569). Dieses Polymer kann wie in US-A-4453991 beschrieben in Lösung gebracht und dann als lonomer eingesetzt werden.

Zu den bevorzugten Polymeren mit Säuregruppen gehören unter anderem sulfonierte Polyetherketone, sulfonierte Polysulfone, sulfonierte Polyphenylensulfide, perfluorinierte sulfonsäuregruppenhaltige Polymere, wie in US-A-3692569, US-A-5422411 und US-A-6110616 beschrieben.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt A), Schritt B) und/oder Schritt C) erfolgen. Des weiteren können diese Additive, falls diese in flüssiger Form vorliegen, auch nach der Polymerisation gemäß Schritt D) beigefügt werden.

Nicht limitierende Beispiele für Protonenleitende Füllstoffe sind

| | |
|---|---|
| Sulfate wie: | CsHSO₄, Fe(SO₄)₂, (NH₄)₃H(SO₄)₂, LiHSO₄. NaHSO₄, KHSO₄, RbSO₄, LiN₂H₅SO₄, NH₄HSO_{4,} |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO4, HSbP₂O₈. HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O(n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄ |
| Selenite und Arsenide wie | (NH₄)₃H(SeO₄)₂, UO₂AsO_{4,} (NH₄)₃H(SeO₄)₂, KH₂AsO₄, Cs₃H(SeO₄)₂, Rb₃H(SeO₄)₂, |
| Phosphide wie | ZrP, TiP, HfP |
| Oxide wie | Al₂O₃, Sb₂O₅, ThO₂, SnO₂, ZrO₂, MoO₃ |
| Silikate wie | Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Behandlung gemäß Schritt D) höchstens 80 Gew.-%, vorzugsweise höchstens 50 Gew.-% und besonders bevorzugt höchstens 20 Gew.-% Additive.

Als weiteres kann diese Membran auch perfluorierte Sulfonsäure-Additive (vorzugsweise 0,1-20 Gew.-%, bevorzugt 0,2-15 Gew.-%, ganz bevorzugt 0,2- 10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.) Nicht limitierende Beispiele für persulfonierte Additive sind:
Trifluomethansulfonsäure, Kaliumtrifluormethansulfonat, Natriumtrifluormethansulfonat, Lithiumtrifluormethansulfonat, Ammoniumtrifluormethansulfonat,
Kaliumperfluorohexansulfonat, Natriumperfluorohexansulfonat,
Lithiumperfluorohexansulfonat, Ammoniumperfluorohexansulfonat,
Perfluorohexansulfonsäure, Kaliumnonafluorbutansulfonat, Natriumnonafluorbutansulfonat, Lithiumnonafluorbutansulfonat, Ammoniumnonafluorbutansulfonat,
Cäsiumnonafluorbutansulfonat, Triethylammoniumperfluorohexasulfonat, Perflurosulfoimide und Nafion.

Die Bildung des flächigen Gebildes gemäß Schritt C) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP).

Zur Einstellung der Viskosität kann die Lösung gegebenenfalls mit einem leicht verdampfbaren organischen Lösungsmittel versetzt werden. Hierdurch kann die Viskosität auf den gewünschten Wert eingestellt und die Bildung der Membran erleichtert werden.

Die Dicke des flächigen Gebildes gemäß Schritt C) beträgt vorzugsweise zwischen 10 und 4000 µm, vorzugsweise zwischen 15 und 3500 µm, insbesondere zwischen 20 und 3000 µm, besonders bevorzugt zwischen 30 und 1500µm und ganz besonders bevorzugt zwischen 50 und 1200 µm.

Die Behandlung der Membran in Schritt D) erfolgt insbesondere bei Temperaturen im Bereich von 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran. Die verfestigte Membran hat im allgemeinen eine Dicke zwischen 15 und 3000 µm, vorzugsweise 20 und 2000 µm, insbesondere zwischen 20 und 1500 µm, wobei die Membran selbsttragend ist.

Durch die Verfestigung der Membran gemäß Schritt D) erhöht sich auch deren Härte, die mittels Mikrohärtemessung gemäss DIN 50539 bestimmt werden kann. Dazu wird die Membran mit einem Vickersdiamant innerhalb von 20 s sukzessive bis zu einer Kraft von 3 mN belastet und die Eindringtiefe bestimmt. Demnach beträgt die Härte bei Raumtemperatur mindestens 5 mN/mm² und bevorzugt mindestens 20 mN/mm², ohne dass hierdurch eine Beschränkung erfolgen soll. Bei diesen Härtewerten sind die Membranen im allgemeinen selbsttragend. In der Folge wird die Kraft während 5 s konstant bei 3 mN gehalten und das Kriechen aus der Eindringtiefe berechnet. Bei bevorzugten Membranen beträgt das Kriechen C_{HU} 0,003/20/5 unter diesen Bedingungen weniger als 30%, bevorzugt weniger als 15% und ganz besonders bevorzugt weniger als 5%. Der mittels Mikrohärtemessung bestimmte Modul beträgt YHU mindestens 0,1 MPa, insbesondere mindestens 2 MPa und ganz besonders bevorzugt mindestens 5 MPa, ohne dass hierdurch eine Beschränkung erfolgen soll.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 80, insbesondere zwischen 12 und 60, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluss an die Behandlung gemäß Schritt D) kann die Membran durch Einwirken von Hitze in Gegenwart von Sauerstoff noch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit ß-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.
Des weiteren zeigen die erfindungsgemäßen Membranen auch bei einer Temperatur von 70°C eine hohe Leitfähigkeit. Die Leitfähigkeit ist unter anderem abhängig vom Sulfonsäuregruppengehalt der Polyazole. Je höher dieser Anteil, desto besser die Leitfähigkeit bei tiefen Temperaturen. Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Zu möglichen Einsatzgebieten der erfindungsgemäßen Polymermembranen gehören unter anderem die Verwendung in Brennstoffzellen, bei der Elektrolyse, in Kondensatoren und in Batteriesystemen.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. In den vorstehend genannten Literaturstellen [US-A-4,191,618, US-A-4,212,714 und US-A-4,333,805] wird der Aufbaues und die Herstellung von Membran-Elektroden-Einheiten, sowie der zu wählenden Elektroden , Gasdiffusionslagen und Katalysatoren beschrieben.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muß. Auch eine solche Membran ist Gegenstand der vorliegenden Erfindung.

Ein weiterer Gegenstand der vorliegenden Erfindung ist eine Elektrode umfassend Sulfonsäuregruppen enthaltende Polyazole erhältlich durch ein Verfahren umfassend die Schritte
A) Mischen von einem oder mehreren aromatischen und/oder heteroaromatischen Tetra-Amino-Verbindungen mit einer oder mehreren aromatischen und/oder heteroaromatischen Carbonsäuren, die mindestens zwei Säuregruppen pro Carbonsäure-Monomer enthalten, deren Ester, Anhydride oder Säurehalogenide, wobei zumindest ein Teil der Tetra-Aminoverbindungen und/oder der Carbonsäuren mindestens eine Sulfonsäuregruppe oder deren Alkalimetallsalz umfasst, oder Mischen von einer oder mehreren aromatischen und/oder heteroaromatischen Diaminocarbonsäuren, von denen zumindest ein Teil Sulfonsäuregruppen umfasst, in Polyphosphorsäure, unter Ausbildung einer Lösung und/oder Dispersion
B) Erwärmen des flächigen Gebildes/Schicht erhältlich gemäß Schritt A) unter Inertgas auf Temperaturen von bis zu 350°C unter Ausbildung des Polyazol-Polymeren,
C) Aufbringen einer Schicht unter Verwendung der Mischung gemäß Schritt A) und/oder Schritt B) auf einer Elektrode,
D) partielle Hydrolyse der in Schritt C) gebildeten Membran in Gegenwart von Feuchtigkeit.

Der Vollständigkeit halber sei festgehalten, dass sämtliche bevorzugten Ausführungsformen einer selbsttragenden Membran entsprechend auch für eine unmittelbar auf die Elektrode aufgebrachte Membran gelten.

Gemäß einem besonderen Aspekt der vorliegenden Erfindung hat die Beschichtung eine Dicke zwischen 2 und 3000 µm, vorzugsweise zwischen 2 und 2000 µm, insbesondere zwischen 3 und 1500 µm, besonders bevorzugt 5 bis 500 µm und ganz besonders bevorzugt zwischen 10 bis 200µm, ohne dass hierdurch eine Beschränkung erfolgen soll.

Die Behandlung gemäß Schritt D) führt zu einer Härtung der Beschichtung. Hierbei erfolgt die Behandlung solange, bis die Beschichtung eine genügende Härte aufweist, um zu einer Membran-Elektroden-Einheit verpresst werden zu können. Eine genügende Härte ist gegeben, wenn eine entsprechend behandelte Membran selbsttragend ist. In vielen Fällen genügt jedoch eine geringere Härte. Die gemäß DIN 50539 (Mikrohärtemessung) bestimmte Härte beträgt im allgemeinen mindestens 1 mN/mm², bevorzugt mindestens 5 mN/mm² und ganz besonders bevorzugt mindestens 15 mN/mm², ohne dass hierdurch eine Beschränkung erfolgen soll.

Eine derartig beschichtete Elektrode kann in einer Membran-Elektroden-Einheit, die gegebenenfalls mindestens eine erfindungsgemäße Polymermembran aufweist, eingebaut werden.

In einer weiteren Variante kann auf die erfindungsgemäße Membran eine katalytisch aktive Schicht aufgebracht werden und diese mit einer Gasdiffusionslage verbunden werden. Hierzu wird gemäß den Schritten A) bis D) eine Membran gebildet und der Katalysator aufgebracht. Auch diese Gebilde sind Gegenstand der vorliegenden Erfindung.

Darüber hinaus kann die Bildung der Membran gemäß den Schritten A) bis D) auch auf einem Träger oder einer Trägerfolie erfolgen, die bereits den Katalysator aufweist. Nach Entfernen des Trägers bzw. der Trägerfolie befindet sich der Katalysator auf der erfindungsgemäßen Membran. Auch diese Gebilde sind Gegenstand der vorliegenden Erfindung.

Ebenfalls Gegenstand der vorliegenden Erfindung ist eine Membran-Elektroden-Einheit, die mindestens eine beschichtete Elektrode und/oder mindestens eine erfindungsgemäße Polymermembran in Kombination mit einer weiteren Polymermembran auf Basis von Polyazolen oder einer Polymerblendmembran enthaltend mindestens ein Polymer auf Basis von Polyazolen aufweist.

### Beispiel 1

Zu einer Mischung aus 1.73387g Isophthalsäure, 2.81524 g (0.010445 mol) Natriumsalz von 5-Sulfoisophthalsäure, und 4.47 g of 3,3',4'-Tetraaminobiphenyl wurde in einem Kolben unter Rühren und Stickstoffatmosphäre 90.98 g Polyphosphorsäure gegeben. Die Mischung wurde bei 180°C 20 h lang polymerisiert. Anschließend wurde die Lösung mit 11.09 g of 85% Phosphorsäure verdünnt. Die Lösung wurde dann bei erhöhter Temperatur auf einer Glassplatte gerakelt und anschließend hydrolysiert.

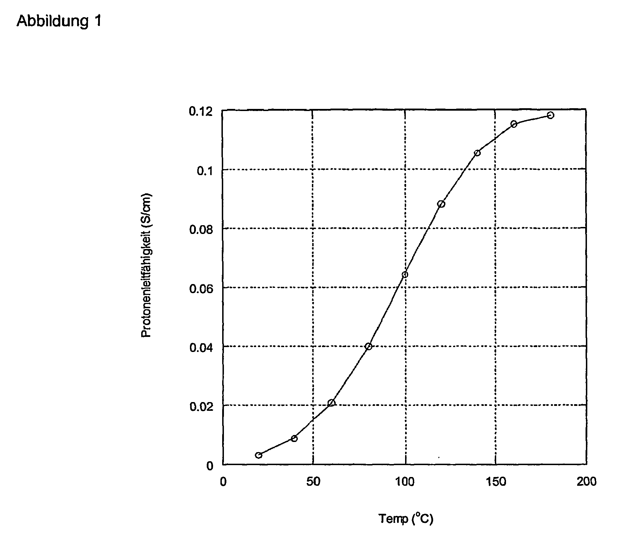

Die Leitfähigkeit der so hergestellten Membran wurde bei verschiedenen Temperaturen bestimmt, wobei die erhaltenen Daten in Abbildung 1 dargelegt sind.

## Patentansprüche

1. Protonenleitende Polymermembran umfassend Sulfonsäuregruppen enthaltende Polyazole erhältlich durch ein Verfahren umfassend die Schritte
A) Mischen von einem oder mehreren aromatischen und/oder heteroaromatischen Tetra-Amino-Verbindungen mit einer oder mehreren aromatischen und/oder heteroaromatischen Carbonsäuren, die mindestens zwei Säuregruppen pro Carbonsäure-Monomer enthalten, deren Ester, Anhydride oder Säurehalogenide, wobei zumindest ein Teil der Tetra-Aminoverbindungen und/oder der Carbonsäuren mindestens eine Sulfonsäuregruppe oder deren Alkalimetallsalz umfasst, oder Mischen von einer oder mehreren aromatischen und/oder heteroaromatischen Diaminocarbonsäuren, von denen zumindest ein Teil Sulfonsäuregruppen umfasst, in Polyphosphorsäure, unter Ausbildung einer Lösung und/oder Dispersion,
B) Erwärmen der Lösung und/oder Dispersion erhältlich gemäß Schritt A) unter Inertgas auf Temperaturen von bis zu 350°C unter Ausbildung von Polyazol-Polymeren,
C) Aufbringen einer Schicht unter Verwendung der Mischung gemäß Schritt A) und/oder B) auf einem Träger,
D) partielle Hydrolyse der in Schritt C) gebildeten Membran in Gegenwart von Feuchtigkeit und für eine Dauer bis diese selbsttragend ist.

2. Membran gemäß Anspruch 1, **dadurch gekennzeichnet, dass** die in Schritt A) hergestellte Mischung aromatische und/oder heteroaromatische Tetra-Amino-Verbindungen der Formel (A) umfasst 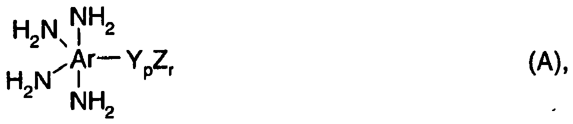 worin
Ar eine aromatische oder heteroaromatische Gruppe darstellt,
Y eine Bindung oder eine 1 bis 20 Kohlenstoffatome aufweisende Gruppe ist,
p eine ganze Zahl zwischen 1 und 4 ist, wobei p die Anzahl an Bindungen oder Gruppen Y darstellt, über die die Gruppe Z mit der Gruppe Ar verknüpft ist,
r eine ganze Zahl zwischen 1 und 4 ist, wobei r die Anzahl der Gruppen Z darstellt, die an die Gruppe Y oder, falls Y eine Bindung ist, an die aromatische oder heteroaromatische Gruppe Ar geknüpft sind, und
Z eine Gruppe der allgemeinen Formel (1)
-SO₃H (1)
oder der allgemeinen Formel (2) 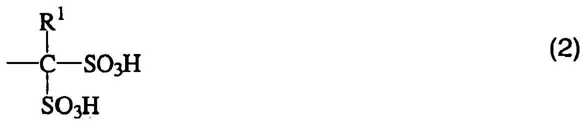 ist, worin R¹ ein Wasserstoffatom oder eine 1 bis 20 Kohlenstoffatome aufweisende Gruppe ist.

3. Membran gemäß Anspruch 1 oder 2, **dadurch gekennzeichnet, dass** die in Schritt A) hergestellte Mischung aromatische und/oder heteroaromatische Carbonsäuren der Formel (B) umfasst 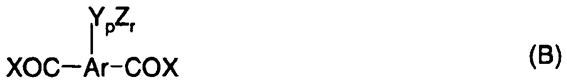 worin
Ar eine aromatische oder heteroaromatische Gruppe darstellt,
X ein Halogenatom oder eine Gruppe der Formel OR² darstellt, worin R² ein Wasserstoffatom oder eine 1 bis 20 Kohlenstoff aufweisende Gruppe darstellt,
Y eine Bindung oder eine 1 bis 20 Kohlenstoffatome aufweisende Gruppe ist,
p eine ganze Zahl zwischen 1 und 4 ist, wobei p die Anzahl an Bindungen oder Gruppen Y darstellt, über die die Gruppe Z mit der Gruppe Ar verknüpft ist,
r eine ganze Zahl zwischen 1 und 4 ist, wobei r die Anzahl der Gruppen Z darstellt, die an die Gruppe Y oder, falls Y eine Bindung ist, an die aromatische oder heteroaromatische Gruppe Ar geknüpft sind, und
Z eine Gruppe der allgemeinen Formel (1)
-SO₃H (1)
oder der allgemeinen Formel (2) 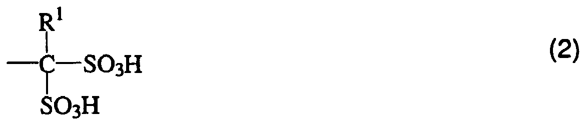 ist, worin R¹ ein Wasserstoffatom oder eine 1 bis 20 Kohlenstoffatome aufweisende Gruppe ist.

4. Membran gemäß Anspruch 1 oder 3, **dadurch gekennzeichnet, dass** die in Schritt A) hergestellte Mischung aromatische und/oder heteroaromatische Tetra-Amino-Verbindungen, die keine Sulfonsäuregruppen enthalten, und aromatische und/oder heteroaromatische Carbonsäuren, die mindestens eine Sulfonsäuregruppen enthalten, umfasst.

5. Membran gemäß einem oder mehreren der vorhergehenden Ansprüche, **dadurch gekennzeichnet, dass** die in Schritt A) hergestellte Mischung 3,3',4,4'-Tetraaminobiphenyl, 2,3,5,6-Tetraaminopyridin und/oder 1,2,4,5-Tetraaminobenzol umfasst.

6. Membran gemäß einem oder mehreren der vorhergehenden Ansprüche, **dadurch gekennzeichnet, dass** die in Schritt A) hergestellte Mischung Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride umfasst.

7. Membran gemäß einem oder mehreren der vorhergehenden Ansprüche, **dadurch gekennzeichnet, dass** die in Schritt A) hergestellte Mischung 2,3-Diamino-5-carboxyphenylsulfonsäure, 2,3-Diamino-6-carboxyphenylsulfonsäure und 3,4-Diamino-6-carboxyphenylsulfonsäure umfasst.

8. Membran gemäß einem oder mehreren der vorhergehenden Ansprüche, **dadurch gekennzeichnet, dass** die in Schritt A) hergestellte Mischung aromatische Tricarbonsäuren, deren C1-C20-Alkyl-Ester oder C5-C12-Aryl-Ester oder deren Säureanhydride oder deren Säurehalogenide oder Tetracarbonsäuren, deren C1-C20-Alkyl-Ester oder C5-C12-Aryl-Ester oder deren Säureanhydride oder deren Säurehalogenide umfasst.

9. Membran gemäß Anspruch 8, **dadurch gekennzeichnet, dass** die in Schritt A) hergestellte Mischung 1,3,5-Benzoltricarbonsäure (trimesic acid); 2,4,5-Benzoltricarbonsäure (trimellitic acid); (2-Carboxyphenyl)iminodiessigsäure, 3,5,3'-Biphenyltricarbonsäure; 3,5,4'-Biphenyltricarbonsäure 2,4,6-Pyridintricarbonsäure, Benzol-1,2,4,5-tetracarbonsäuren; Naphthalin-1,4,5,8-tetracarbonsäuren, 3,5,3',5'-Biphenyltetracarbonsäuren, Benzophenontetracarbonsäure, 3,3',4,4'-Biphenyltetracarbonsäure, 2,2',3,3'-Biphenyltetracarbonsäure, 1,2,5,6-Naphthalintetracarbonsäure und/oder 1,4,5,8-Naphthalintetracarbonsäure umfasst.

10. Membran gemäß Anspruch 8 oder 9, **dadurch gekennzeichnet, dass** der Gehalt an Tricarbonsäure und/oder Tetracarbonsäuren zwischen 0 und 30 Mol-%, vorzugsweise 0,1 und 20 Mol-%, insbesondere 0,5 und 10 Mol%, bezogen auf eingesetzte Dicarbonsäure, beträgt.

11. Membran gemäß Anspruch 1, **dadurch gekennzeichnet, dass** die in Schritt A) hergestellte Mischung heteroaromatische Dicarbonsäuren, Tricarbonsäuren und/oder Tetracarbonsäuren umfasst, welche mindestens ein Stickstoff, Sauerstoff, Schwefel oder Phosphoratom im Aromaten enthalten.

12. Membran gemäß Anspruch 11, **dadurch gekennzeichnet, dass** Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride eingesetzt werden.

13. Membran gemäß Anspruch 1, **dadurch gekennzeichnet, dass** die in Schritt A) hergestellte Mischung Diaminobenzoesäure und/oder deren Mono- und Dihydrochloridderivate umfasst.

14. Membran gemäß einem oder mehreren der vorhergehenden Ansprüche, **dadurch gekennzeichnet, dass** die Erwärmung gemäß Schritt B) nach der Bildung eines flächigen Gebildes gemäß Schritt C) erfolgt.

15. Membran gemäß Anspruch 1, **dadurch gekennzeichnet, dass** die in Schritt A) und/oder Schritt B) erzeugte Lösung zusätzlich dispergiertes und/oder suspendiertes Polymer enthält.

16. Membran gemäß Anspruch 1, **dadurch gekennzeichnet, dass** die partielle Hydrolyse-Behandlung gemäß Schritt D) bei Temperaturen im Bereich von 0°C und 150°C in Gegenwart von Feuchtigkeit erfolgt.

17. Membran gemäß Anspruch 1, **dadurch gekennzeichnet, dass** die partielle Hydrolyse-Behandlung der Membran in Schritt D) zwischen 10 Sekunden und 300 Stunden beträgt.

18. Membran gemäß Anspruch 1, **dadurch gekennzeichnet, dass** die nach Schritt D) gebildete Membran durch Einwirkung von Sauerstoff vernetzt wird.

19. Membran gemäß Anspruch 1, **dadurch gekennzeichnet, dass** in Schritt C) eine Schicht mit einer Dicke von 20 und 4000 µm erzeugt wird.

20. Membran gemäß Anspruch 1, **dadurch gekennzeichnet, dass** die nach Schritt D) gebildete Membran eine Dicke zwischen 15 und 3000 µm hat.

21. Membran gemäß Anspruch 1, **dadurch gekennzeichnet, dass** in Schritt A) die C1-C20-Alkylester, C5-C12-Aryl-Ester oder die Säurechloride und/oder Säurebromide, der aromatischen und/oder heteroaromatischen Carbonsäuren, die mindestens zwei Säuregruppen pro Carbonsäure-Monomer enthalten, eingesetzt werden.

22. Elektrode mit einer protonenleitenden Polymerbeschichtung auf Basis von Polyazolen erhältlich durch ein Verfahren umfassend die Schritte
A) Mischen von einem oder mehreren aromatischen und/oder heteroaromatischen Tetra-Amino-Verbindungen mit einer oder mehreren aromatischen und/oder heteroaromatischen Carbonsäuren, die mindestens zwei Säuregruppen pro Carbonsäure-Monomer enthalten, deren Ester, Anhydride oder Säurehalogenide, wobei zumindest ein Teil der Tetra-Aminoverbindungen und/oder der Carbonsäuren mindestens eine Sulfonsäuregruppe oder deren Alkalimetallsalz umfasst, oder Mischen von einer oder mehreren aromatischen und/oder heteroaromatischen Diaminocarbonsäuren, von denen zumindest ein Teil Sulfonsäuregruppen umfasst, in Polyphosphorsäure, unter Ausbildung einer Lösung und/oder Dispersion
B) Erwärmen des flächigen Gebildes/Schicht erhältlich gemäß Schritt A) unter Inertgas auf Temperaturen von bis zu 350°C unter Ausbildung des Polyazol-Polymeren,
C) Aufbringen einer Schicht unter Verwendung der Mischung gemäß Schritt A) und/oder Schritt B) auf einer Elektrode,
D) partielle Hydrolyse der in Schritt C) gebildeten Membran in Gegenwart von Feuchtigkeit.

23. Elektrode gemäß Anspruch 22, wobei die Beschichtung eine Dicke zwischen 2 und 3000 µm hat.

24. Membran-Elektroden-Einheit enthaltend mindestens eine Elektrode und mindestens eine Membran gemäß einem oder mehreren der Ansprüche 1 bis 21.

25. Membran-Elektroden-Einheit enthaltend mindestens eine Elektrode gemäß Anspruch 22 oder 23 und mindestens eine Membran gemäß einem oder mehreren der Ansprüche 1 bis 21.

26. Brennstoffzelle enthaltend eine oder mehrere Membran-Elektroden-Einheiten gemäß Anspruch 24 oder 25.

## Claims

1. A proton-conducting polymer membrane comprising sulfonic acid groups containing polyazoles, which membrane can be obtained by a method comprising the steps of
A) mixing one or more aromatic and/or heteroaromatic tetra-amino compounds with one or more aromatic and/or heteroaromatic carboxylic acids which contain at least two acid groups per carboxylic acid monomer, their esters, anhydrides or acid halides, wherein at least a proportion of the tetra-amino compounds and/or of the carboxylic acids comprises at least one sulfonic acid group or the alkali metal salt thereof, or mixing one or more aromatic and/or heteroaromatic diaminocarboxylic acids, at least a proportion of which comprises sulfonic acid groups, in polyphosphoric acid, while forming a solution and/or dispersion,
B) heating the solution and/or dispersion obtainable according to step A) under inert gas to temperatures of up to 350°C while forming polyazole polymers,
C) application of a layer using the mixture according to step A) and/or B) to a support,
D) partial hydrolysis of the membrane formed in step C) in the presence of moisture and for a sufficient duration, until it is self-supporting.

2. The membrane according to claim 1, **characterized in that** the mixture produced in step A) comprises aromatic and/or heteroaromatic tetraamino compounds of the formula (A) 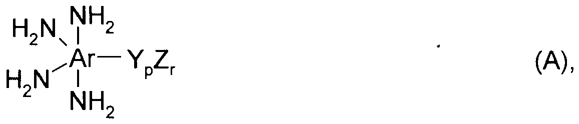 in which
Ar represents an aromatic or heteroaromatic group,
Y is a bond or a group having from 1 to 20 carbon atoms,
p is an integer between 1 and 4, wherein p represents the number of bonds or groups Y via which the group Z is bound to the group Ar,
r is an integer between 1 and 4, wherein r represents the number of groups Z, which are bound to the group Y or, in case Y is a bond, which are bound to the aromatic or heteroaromatic group Ar, and
Z is a group of the general formula (1)
-SO₃H (1)
or of the general formula (2) 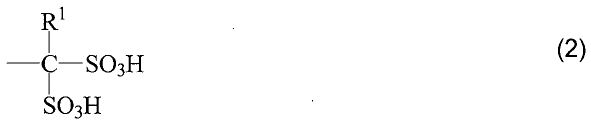 in which R¹ is a hydrogen atom or a group having from 1 to 20 carbon atoms.

3. The membrane according to claim 1 or 2, **characterized in that** the mixture produced in step A) comprises aromatic and/or heteroaromatic carboxylic acids of the formula (B) 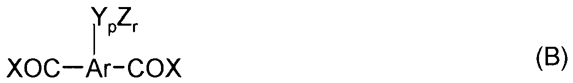 in which
Ar represents an aromatic or heteroaromatic group,
X represents a halogen atom or a group of the formula OR² in which R² represents a hydrogen atom or a group having from 1 to 20 carbon atoms,
Y is a bond or a group having from 1 to 20 carbon atoms,
p is an integer between 1 and 4, wherein p represents the number of bonds or groups Y via which the group Z is bound to the group Ar,
r is an integer between 1 and 4, wherein r represents the number of groups Z, which are bound to the group Y or, in case Y is a bond, which are bound to the aromatic or heteroaromatic group Ar, and
Z is a group of the general formula (1)
-SO₃H (1)
or of the general formula (2) 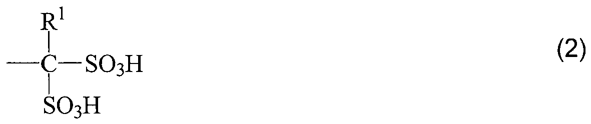 in which R¹ is a hydrogen atom or a group having from 1 to 20 carbon atoms.

4. The membrane according to claim 1 or 3, **characterized in that** the mixture produced in step A) comprises aromatic and/or heteroaromatic tetraamino compounds, which contain no sulfonic acid groups, and aromatic and/or heteroaromatic carboxylic acids, which contain at least one sulfonic acid group.

5. The membrane according to one or more of the preceding claims, **characterized in that** the mixture produced in step A) comprises 3,3',4,4'-tetraaminobiphenyl, 2,3,5,6-tetraaminopyridine and/or 1,2,4,5-tetraaminobenzene.

6. The membrane according to one or more of the preceding claims, **characterized in that** the mixture produced in step A) comprises isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid,1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenyl ether-4,4'-dicarboxylic acid, benzophenone-4,4'-dicarboxylic acid, diphenylsulphone-4,4'-dicarboxylic acid, biphenyl-4,4'-dicarboxylic acid, 4-trifluoromethylphthalic acid, 2,2-bis-(4-carboxyphenyl)hexafluoropropane, 4,4'-stilbenedicarboxylic acid, 4-carboxycinnamic acid or their C1-C20 alkyl esters or C5-C12 aryl esters or their acid anhydrides or their acid chlorides.

7. The membrane according to one or more of the preceding claims, **characterized in that** the mixture produced in step A) comprises 2,3-diamino-5-carboxyphenyl sulfonic acid, 2,3-diamino-6-carboxyphenyl sulfonic acid and 3,4-diamino-6-carboxyphenyl sulfonic acid.

8. The membrane according to one or more of the preceding claims, **characterized in that** the mixture produced in step A) comprises aromatic tricarboxylic acids, their C1-C20-alkyl esters or C5-C12-aryl esters or their acid anhydrides or their acid halides or tetracarboxylic acids, their C1-C20-alkyl esters or C5-C12-aryl esters or their acid anhydrides or their acid halides.

9. The membrane according to claim 8, **characterized in that** the mixture produced in step A) comprises 1,3,5-benzenetricarboxylic acid (trimesic acid); 2,4,5-benzenetricarboxylic acid (trimellitic acid); (2-carboxyphenyl)iminodiacetic acid, 3,5,3'-biphenyltricarboxylic acid; 3,5,4'-biphenyltricarboxylic acid; 2,4,6-pyridinetricarboxylic acid, benzene-1,2,4,5-tetracarboxylic acids; naphthalene-1,4,5,8-tetracarboxylic acids, 3,5,3',5'-biphenyltetracarboxylic acids, benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid and/or 1,4,5,8-naphthalenetetracarboxylic acid.

10. The membrane according to claim 8 or 9, **characterized in that** the content of tricarboxylic acids and/or tetracarboxylic acids is in the range from 0 to 30 % by mole, preferably from 0.1 to 20 % by mole, in particular from 0.5 to 10 % by mole, with reference to the dicarboxylic acid used.

11. The membrane according to claim 1, **characterized in that** the mixture produced in step A) comprises heteroaromatic dicarboxylic acids, tricarboxylic acids and/or tetracarboxylic acids, which contain at least one nitrogen, oxygen, sulfur or phosphorus atom in the aromatic group.

12. The membrane according to claim 11, **characterized in that** pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid as well as their C1-C20 alkyl esters or C5-C12 aryl esters or their acid anhydrides or their acid chlorides are used.

13. The membrane according to claim 1, **characterized in that** the mixture produced in step A) comprises diaminobenzoic acid and/or the monohydrochloride and dihydrochloride derivatives thereof.

14. The membrane according to one or more of the preceding claims, **characterized in that** the heating according to step B) is carried out after formation of a planar structure according to step C).

15. The membrane according to claim 1, **characterized in that** the solution produced in step A) and/or step B) additionally contains dispersed and/or suspended polymer.

16. The membrane according to claim 1, **characterized in that** the partial hydrolyzing treatment according to step D) is carried out at temperatures in the range of from 0°C to 150°C in the presence of moisture.

17. The membrane according to claim 1, **characterized in that** the partial hydrolyzing treatment of the membrane in step D) is carried out for from 10 seconds to 300 hours.

18. The membrane according to claim 1, **characterized in that** the membrane formed after step D) is cross-linked by action of oxygen.

19. The membrane according to claim 1, **characterized in that** a layer having a thickness of from 20 to 4000 µm is produced in step C).

20. The membrane according to claim 1, **characterized in that** the membrane formed after step D) has a thickness of from 15 to 3000 □m.

21. The membrane according to claim 1, **characterized in that** in step A) the C1-C20-alkyl esters, C5-C12-aryl esters or the acid chlorides and/or acid bromides, the aromatic and/or heteroaromatic carboxylic acids, which contain at least two acid groups per carboxylic acid monomer are used.

22. An electrode having a proton-conducting polymer coating based on polyazoles which can be obtained by a method comprising the steps of
A) mixing one or more aromatic and/or heteroaromatic tetra-amino compounds with one or more aromatic and/or heteroaromatic carboxylic acids which contain at least two acid groups per carboxylic acid monomer, their esters, anhydrides or acid halides, wherein at least a portion of the tetra-amino compounds and/or of the carboxylic acids comprises at least one sulfonic acid group or the alkali metal salt thereof, or mixing one or more aromatic and/or heteroaromatic diaminocarboxylic acids, at least a portion of which comprises sulfonic acid groups, in polyphosphoric acid, while forming a solution and/or dispersion,
B) heating the planar structure/layer obtainable according to step B) under inert gas to temperatures of up to 350 °C while forming the polyazole polymer,
C) application of a layer using the mixture according to step A) and/or step B) to an electrode,
D) partial hydrolysis of the membrane formed in step C) in the presence of moisture.

23. The electrode according to claim 22, wherein the coating has a thickness of between 2 and 3000 µm.

24. A membrane electrode unit containing at least one electrode and at least one membrane according to one or more of claims 1 to 21.

25. The membrane electrode unit containing at least one electrode according to claim 22 or claim 23 and at least one membrane according to one or more of claims 1 to 21.

26. A fuel cell containing one or more membrane electrode units according to claim 24 or claim 25.

## Revendications

1. Membrane de polymère conductrice de proton comprenant des polyazoles contenant des groupes d'acide sulfonique, obtenue au moyen d'un procédé comprenant les étapes
A) Mélange d'un ou plusieurs composés de tétramine aromatiques ou hétéroaromatiques avec un ou plusieurs acides carboxyliques aromatiques ou hétéroaromatiques, qui contiennent au moins deux groupes d'acide par monomère d'acide carboxylique, leur ester, anhydride ou halogénure d'acide, où au moins une partie des composés de tétramine ou de l'acide carboxylique comprend au moins un groupe d'acide sulfonique ou leur sel de métal alcalin, ou le mélange d'un ou plusieurs acides diaminocarboxyliques aromatiques ou hétéroaromatiques, desquels au moins une part comprend des groupes d'acides sulfoniques, dans de l'acide polyphosphorique, sous forme de solution ou de dispersion,
B) Chauffage de la solution ou dispersion obtenue à l'étape A) dans du gaz inerte à des températures pouvant atteindre 350 °C sous la forme de polymères de polyazole,
C) Pose d'une couche du mélange obtenue en A) ou B) sur un support,
D) Hydrolyse partielle de la membrane formée en C) en présence d'humidité et jusqu'à ce qu'elle soit autoporteuse.

2. Membrane selon la revendication 1, **caractérisée en ce que** le mélange fabriquée à l'étape A) comprend des composés de tétramine aromatiques ou hétéroaromatiques de la formule (A) 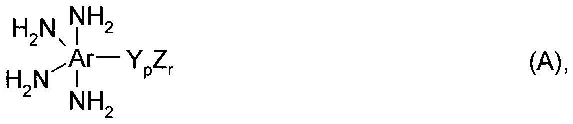 où
Ar représente un groupe aromatique ou hétéroaromatique,
Y est une fixation ou un groupe présentant entre 1 et 20 atomes de carbone,
p un nombre entier entre 1 et 4, p représentant le nombre de fixations ou de groupes Y par lesquels le groupe Z est lié au groupe Ar,
r un nombre entier entre 1 et 4, r représentant le nombre de groupes Z qui sont liés au groupe Y ou, si Y est une fixation, au groupe Ar aromatique ou hétéroaromatique, ou est
Z un groupe de la formule générale (1)
-SO₃H (1)
ou de la formule générale (2) 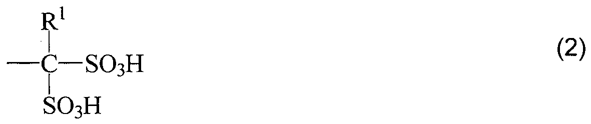 où R¹ est un atome d'hydrogène ou un groupe présentant entre 1 et 20 atomes de carbone.

3. Membrane selon les revendications 1 ou 2, **caractérisée en ce que** le mélange obtenue à l'étape A) comprend des acides carboxyliques aromatiques ou hétéroaromatiques de la formule (B) 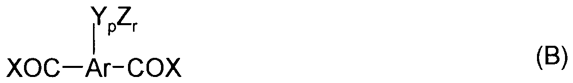 où
Ar représente un groupe aromatique ou hétéroaromatique,
X représente un atome d'halogène ou un groupe de la formule OR², ou R² représente un atome d'hydrogène ou un groupe présentant entre 1 et 20 atomes de carbone,
Y est une fixation ou un groupe présentant entre 1 et 20 atomes de carbone,
p un nombre entier entre 1 et 4, p représentant le nombre de fixations ou de groupes Y par lesquels le groupe Z est lié au groupe Ar
r un nombre entier entre 1 et 4, r représentant le nombre de groupes Z qui sont liés au groupe Y ou, si Y est une fixation, au groupe Ar aromatique ou hétéroaromatique, ou est
Z un groupe de la formule générale (1)
-SO₃H (1)
ou de la formule générale (2) 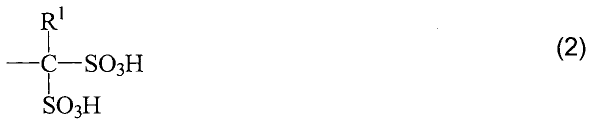 où R¹ est un atome d'hydrogène ou un groupe présentant entre 1 et 20 atomes de carbone.

4. Membrane selon la revendication 1 ou 3, **caractérisée en ce que** le mélange obtenu à l'étape A) comprend des composés de tétramine aromatiques ou hétéroaromatiques qui ne contiennent pas de groupes d'acide sulfonique ; ou des acides carboxyliques aromatiques ou hétéroaromatiques qui contiennent au moins un groupe d'acide sulfonique.

5. Membrane selon une ou plusieurs des revendications précédentes, **caractérisée en ce que** le mélange obtenu à l'étape A) comprend 3,3',4,4'-tétraminobiphényle, 2,3,5,6-tétraminopyridine ou 1,2,4,5-tétraminobenzène.

6. Membrane selon une ou plusieurs des revendications précédentes, **caractérisée en ce que** le mélange obtenu à l'étape A) comprend de l'acide isophtalique, acide téréphtalique, acide phtalique, 5-acide hydroxyisophtalique, 4-acide hydroxyisophtalique, 2-acide hydroxytéréphtalique, 5-acide aminoisophtalique, 5-N,N-acide diméthylaminoisophtalique, 5-N,N- acide diéthylaminoisophtalique, 2,5-acide dihydroxytéréphtalique, 2,5-acide dihydroxyisophtalique, 2,3-acide dihydroxyisophtalique, 2,3-acide dihydroxyphtalique, 2,4-acide dihydroxyphtalique, 3,4-acide dihydroxyphtalique, 3-acide fluorophtalique, 5-acide fluoroisophtalique, 2-acide fluorotéréphtalique, acide tétrafluorophtalique, acide tétrafluoroisophtalique, acide tétrafluorotéréphtalique, 1,4-acide naphtalène-dicarboxylique, 1,5-acide naphtalène-dicarboxylique, 2,6-acide naphtalène-dicarboxylique, 2,7 - acide naphtalène-dicarboxylique, 2,6- acide naphtalène-dicarboxylique, 2,7- acide naphtalène-dicarboxylique, acide diphénique, 1,8-acide dihydroxynaphtalène-3,6-dicarboxylique, acide diphényléther-4,4'-dicarboxylique, acide benzophénone-4,4'-dicarboxylique, acide diphénylsulfone-4,4'-dicarboxylique, acide biphényle-4,4'-dicarboxylique, 4-acide trifluorométhylphtalique, 2,2-Bis(4-carboxyphényle)hexafluoropropane, 4,4'-acide stilbendicarboxylique, 4-acide carboxycinnamique, ou leur ester alkyle C1-C20 ou ester alkyle C5-C12 ou leur anhydride d'acide ou leur chlorure d'acide.

7. Membrane selon une ou plusieurs des revendications précédentes, **caractérisée en ce que** le mélange obtenu à l'étape A) comprend de l'acide 2,3-siamino-5-carboxyphényle sulfone, acide 2,3-siamino-6-carboxyphényle sulfone et acide 3,4-siamino-6-carboxyphényle sulfone.

8. Membrane selon une ou plusieurs des revendications précédentes, **caractérisée en ce que** le mélange obtenu à l'étape A) comprend des acides tricarboxyliques, leur ester alkyle C1-C20 ou ester alkyle C5-C12 ou leur anhydride d'acide ou leur halogénure d'acide; ou des acides tétracarboxyliques, leur ester alkyle C1-C20 ou ester alkyle C5-C12 ou leur anhydride d'acide ou leur halogénure d'acide.

9. Membrane selon la revendication 8, **caractérisée en ce que** le mélange obtenu à l'étape A) comprend de l'acide benzène-1,3,5-tricarboxylique (acide trimésique); acide benzène-2,4,5-tricarboxylique (acide trimellitique); (2-Carboxyphényle)acide iminodiacétique, acide biphényle-3,5,3'-tricarboxylique ; acide biphényle-3,5,4'-tricarboxylique, acide pyridine-2,4,6-tricarboxylique, acide benzène-1,2,4,5-tétracarboxylique ; acides naphtalène-1,4,5,8-tétracarboxylique, acides biphényle-3,5,3',5'-tétracarboxylique, acide benzophénone tétracarboxylique, acide biphényle-3,3',4,4'-tétracarboxylique, acide biphényle-2,2',3,3'-tétracarboxylique, acide naphtalène-1,2,5,6-tetracarboxylique ou acide naphtalène-1,4,5,8-tétracarboxylique.

10. Membrane selon les revendications 8 ou 9, **caractérisée en ce que** la teneur en acide tricarboxylique ou acides tétracarboxylique s'élève entre 0 et 30 % molaire, préférablement 0,1 et 20 % molaire, surtout 0,5 et 10 % molaire, par rapport à l'acide dicarboxylique ajouté.

11. Membrane selon la revendication 1, **caractérisée en ce que** le mélange obtenu à l'étape A) comprend des acides dicarboxyliques, acides tricarboxyliques ou acides tétracarboxyliques dont la combinaison aromatique contient au moins un atome d'azote, oxygène, souffre ou phosphore.

12. Membrane selon la revendication 11, **caractérisée en ce que** sont ajoutés l'acide pyridine-2,5-dicarboxylique, acide pyridine-3,5-dicarboxylique, acide pyridine-2,6-dicarboxylique, acide pyridine-2,4-dicarboxylique, acide-4-phényle-2,5-pyridine dicarboxylique, acide pyrazole-3,5-dicarboxylique, acide pyrimidine-2,6-dicarboxylique, acide pyrazine-2,5-dicarboxylique, acide pyridine-2,4,6-tricarboxylique, benzimidazole-5,6-dicarboxylique, ainsi que leur ester alkyle C1-C20 ou ester alkyle C5-C12, ou leur anhydride d'acide ou leur chlorure d'acide.

13. Membrane selon la revendication 1, **caractérisée en ce que** le mélange obtenue à l'étape A) comprend un acide diaminobenzoïque ou ses dérivés de mono ou dihydrochlorure.

14. Membrane selon une ou plusieurs des revendications précédentes, **caractérisé en ce que** le chauffage d'après l'étape B) est effectué après la formation d'une formation étendue d'après l'étape C).

15. Membrane selon la revendication 1, **caractérisée en ce que** la solution produite à l'étape A) ou B) contient de plus un polymère dispersé ou suspendu.

16. Membrane selon la revendication 1, **caractérisée en ce que** le traitement par hydrolyse partielle d'après l'étape D) est effectué en présence d'humidité et à des températures entre 0 °C et 150 °C.

17. Membrane selon la revendication 1, **caractérisée en ce que** le traitement de la membrane à l'étape D) dure entre 10 et 300 secondes.

18. Membrane selon une ou plusieurs des revendications précédentes, **caractérisée en ce que** la membrane formée d'après l'étape D) est réticulée grâce à l'effet de l'oxygène.

19. Membrane selon la revendication 1, **caractérisé en ce qu'**une couche d'une épaisseur de 20 et 4000 µm est obtenue à l'étape C).

20. Membrane selon la revendication 1, **caractérisée en ce que** la membrane formée d'après l'étape D) a une épaisseur d'entre 15 et 3000 µm.

21. Membrane selon la revendication 1, **caractérisée en ce que**, à l'étape A), l'ester alkyle C1-C20, l'ester alkyle C5-C12 ou la chlorure d'acide ou la bromure d'acide sont intégrés aux acides carboxyliques aromatiques ou hétéroaromatiques, qui contiennent au moins deux groupes d'acide par monomère d'acide carboxylique.

22. Électrode avec une couche de conductrice de proton à base de polyazoles obtenus au moyen d'un procédé comprenant les étapes
A) Mélange d'un ou plusieurs composés de tétramine aromatiques ou hétéroaromatiques avec un ou plusieurs acides carboxyliques aromatiques ou hétéroaromatiques, qui contiennent au moins deux groupes d'acide par monomère d'acide carboxylique, leur ester, anhydride ou halogénure d'acide, où au moins une partie des composés de tétramine ou de l'acide carboxylique comprend au moins un groupe d'acide sulfonique ou leur sel de métal alcalin, ou le mélange d'un ou plusieurs acides diaminocarboxyliques aromatiques ou hétéroaromatiques, desquels au moins une part comprend des groupes d'acides sulfoniques, dans de l'acide polyphosphorique, sous forme de solution ou de dispersion,
B) Chauffage de la solution ou dispersion obtenue à l'étape A) dans du gaz inerte à des températures pouvant atteindre 350 °C sous la for me de polymères de polyazole,
C) Pose d'une couche du mélange obtenue en A) ou B) sur un support,
D) Hydrolyse partielle de la membrane formée en C) en présence d'humidité et jusqu'à ce qu'elle soit autoporteuse.

23. Électrode selon la revendication 22, la couche ayant une épaisseur d'entre 2 et 3000 µm.

24. Unité membrane-électrodes comprenant au moins une électrode et au moins une membrane selon une ou plusieurs des revendications 1 à 21.

25. Unité membrane-électrodes comprenant au moins une électrode selon les revendications 22 ou 23 et au moins une membrane selon une ou plusieurs des revendications 1 à 21.

26. Pile à combustible contenant une ou plusieurs unités membrane-électrodes selon les revendications 24 ou 25.
